# EUROPEAN PATENT SPECIFICATION

(11) **EP 2 518 340 B1**
(45) Date of publication and mention of the grant of the patent: **27.12.2017**
(21) Application number: 12157277.0
(22) Date of filing: 28.02.2012
(51) Int. Cl.: C09J 5/00, C09J 5/04, F16B 11/00

(54) **Fay surface sealant application**
Passflächen-Abdichtungsanwendung
Application d'un matériau d'étanchéité de surface de contact

(30) Priority: 28.04.2011 US 201113095993
(43) Date of publication of application: 31.10.2012
(73) Proprietor: Sikorsky Aircraft Corporation, Stratford, CT 06615 (US)
(72) Inventor: Denavit, Paul H., Woodbridge, CT Connecticut 06525 (US); Hovan, William E., Oxford, CT Connecticut 06478 (US); Rogg, Christian A., New Milford, CT Connecticut 06776 (US); Bremmer, Jonathan, Glastonbury, CT Connecticut 06033 (US); Sauer, Jeffrey G., Woodbury, CT Connecticut 06798 (US); McNeill, Chandira, West Haven, CT Connecticut 06516 (US)
(74) Representative: Schmitt-Nilson Schraud Waibel Wohlfrom Patentanwälte Partnerschaft mbB

(56) References cited:
- EP-A1- 0 269 458
- EP-A2- 2 263 865
- WO-A1-01/19936
- WO-A1-03/039851
- DE-A1- 2 854 766

## Description

### BACKGROUND OF THE INVENTION

The subject matter disclosed herein relates to aircraft structures. More specifically, the subject disclosure relates to fay surface sealant applications between adjoining aircraft components.

Interfaces between adjoining components of aircraft structures often require the application of a fay surface sealant on one or both of the components. The typical fay surface sealant is a flexible sealant that attaches to one or both of the components and acts as a sealing membrane and may be, for example, a urethane, rubber or silicone material. The sealant is applied, especially in cases where the adjoining components are of dissimilar materials such as aluminum and graphite, to prevent corrosion. Some interfaces also require the application of a liquid shim to close up gaps between the components due to typical manufacturing tolerances. Typical materials used as liquid shims include curing methyl methacrylate adhesives, urethanes and epoxies. Application of the liquid shim and fay surface sealant at such interfaces can be a difficult and time-consuming process. They typical process includes applying the liquid shim to one or both of the components and adhering a release tape or the like to the facing surface. The components are then assembled and the liquid shim cures to the desired thickness. Fastener holes for final assembly are drilled out to full size through the cured liquid shim. The components are then disassembled and the release tape is removed and the components and liquid shim are deburred. The fay surface sealant is then applied to one of the components, the components are reassembled, requiring realignment of the installation holes. Finally, fasteners are installed as required to secure the components at the interface with the fay surface sealant and liquid shim therebetween. EP 0 269 458 A1 discloses a method of fixing a skin to a sub-structure, wherein a liquid shim is applied to the surface of the sub-structure with a cling film protective upper layer. The skin is then applied and fastener bores are drilled through skin and substructure. The skin is then removed; the skin does not adhere to the liquid shim because of the cling film which is then removed. Nuts are then secured to the sub-structure. Sealant is then applied to the liquid shim upper surface and the skin is reapplied. Bolts, which may be dipped in sealant, are then tightened into the nuts.

WO 03/039851 A1 discloses method of assembling a first and a second component, wherein an electrically insulant woven fibre impregnated with a sealant is disposed either on the first or the second component so that on assembly said cloth is located between the two components, thereby forming part of the joint. The method comprises an optional step of applying a shim layer to a facing of one of the components, curing and machining said shim layer prior to assembly.

### BRIEF DESCRIPTION OF THE INVENTION

According to one aspect of the invention, a method of sealing between two components includes applying and curing a layer of fay surface sealant to a first component. A layer of liquid shim is applied to one or more of the first component and a second component. The first component is assembled to the second component with the layer of fay surface sealant and the layer of liquid shim therebetween.

In further embodiments such method further may comprise securing the first component to the second component via one or more mechanical fasteners. The method further may comprise: forming one or more fastener installation holes extending through the first component and into the second component; and installing the one or more mechanical fasteners in the one or more fastener installation holes. The method further may comprise squeezing excess liquid shim from between the first component and the second component. The method further may comprise applying the layer of fay surface sealant at a maximum thickness of 0.254 mm (0.010"). The method further may comprise curing the fay surface sealant via an application of heat.

According to another aspect of the invention, an assembly of two components includes a first component and a layer of fay surface sealant applied and cured to a first facing surface of the first component. A second component includes a second facing surface, such that the second facing surface and the layer of fay surface sealant define a gap therebetween. A layer of liquid shim is located between the second component and the layer of fay surface sealant thereby substantially filling the gap.

In further embodiments the assembly further may comprise one or more mechanical fasteners securing the first component to the second component. Particularly, the one or more mechanical fasteners may comprise one or more screws, pins, bolts or rivets. In further embodiments of the assembly the layer of fay surface sealant may have a maximum of 0.254 mm (0.010") in thickness. In further embodiments of the assembly an applied thickness of liquid shim may be greater than the gap.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
The Figure is a schematic cross-sectional view of a joint between two components.

The detailed description explains embodiments of the invention, together with advantages and features, by way of example with reference to the drawings.

### DETAILED DESCRIPTION OF THE INVENTION

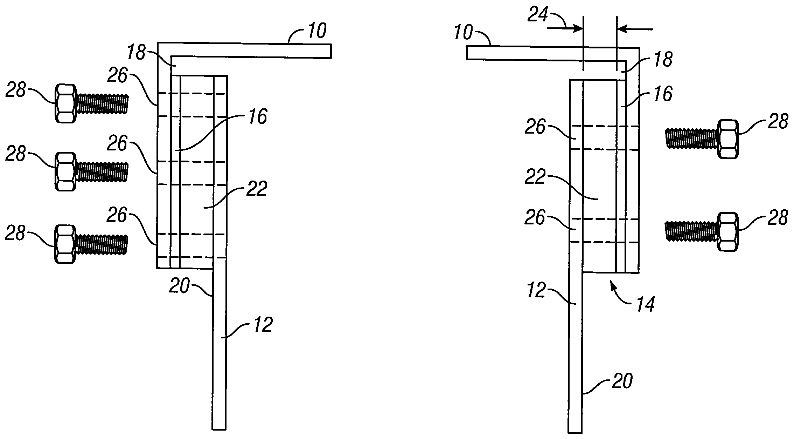

Shown in FIG. 1 is a schematic of an improved method for securing components at an interface including utilization of liquid shim and fay surface sealant. A first component 10 is secured to a second component 12 at an interface 14. In some embodiments, the first component 10 and the second component 12 are aircraft components, for example, fittings, ducts, or external skin components. In some embodiments, the first component 10 and the second component 12 are formed of the same material, or similar materials. In other embodiments, the first component 10 is formed from a material different or dissimilar from the second component 12. For example, the first component 10 may be formed from a metallic material such as an aluminum or aluminum alloy, while the second component 12 may be formed from a non-metallic material such as a graphite or composite material. Such interfaces where the first component 10 and the second component 12 require the use of fay surface sealant to prevent corrosion caused by direct contact between the first component 10 and the second component 12.

In the improved process, a thin coat of fay surface sealant 16 is applied to the first component 10 at a first facing surface 18 that, when assembled to the second component 12 abuts a second facing surface 20 of the second component. In some embodiments, the fay surface sealant is a flexible sealant which is, for example, a urethane, rubber or silicone material. The fay surface sealant 16 may be applied by brush, sprayer, to other suitable means, and in some embodiments is applied to a maximum thickness of 0.010" (0.254 mm). The fay surface sealant 16 is cured on the first component by, for example, the application of heat or alternatively via a room temperature cure. As such, the fay surface sealant 16 can be applied and cured prior to assembly, even at another location other than the assembly location.

Once the fay surface sealant 16 is cured, a layer of liquid shim 22 material is applied to the first component 10 and/or the second component 12 at the first facing surface 18 and/or the second facing surface 18. In some embodiments, the liquid shim material is a curing methyl methacrylate adhesives, urethane or epoxy. The liquid shim 22 is installed over the fay surface sealant 16. The liquid shim 22 is utilized to eliminate a gap 24 due to, for example, manufacturing tolerances of the first component 10 and/or the second component 12, between the first facing surface 18 and the second facing surface 20 when the first component 10 is assembled to the second component 12. The liquid shim 22 is applied via brush, sprayer or other suitable means.

When the liquid shim 22 is applied, the first component 10 is assembled to the second component 12 at the interface 14. In some embodiments, a liquid shim thickness as applied is greater than the gap 24.In such embodiments, when the first component 10 is assembled to the second component 12, excess liquid shim 22 is squeezed from the gap 24. The first component 10 is then secured to the second component 12 by, for example, drilling a plurality of fastener holes 26 extending through the first component 10 and the second component 12. A plurality of fasteners 28, for example, screws, rivets, bolts, pins, or the like are installed in the fastener holes 26 to secure the first component 10 to the second component 12, with the layer of fay surface sealant 14 therebetween to prevent corrosion of the first component 10 and/or the second components, and a layer of liquid shim 20 to eliminated gaps 22 between the first component 10 and the second component 12 at the interface 14.

The method of the present disclosure allows for installation of liquid shim at the interface without the need to assemble the components after application of the liquid shim, disassemble the components once the liquid shim cures, and then reassemble after application of a layer of fay surface sealant. Further, the present method eliminates the need for the use of release tape or the like to allow for disassembly during the process, and allows for the application of fay surface sealant prior to assembly, even offsite.

## Claims

1. A method of sealing between two components (10, 12) comprising:
a first step of applying a layer of fay surface sealant (16) to a first facing surface (18) of a first component (10);
a second step of curing the fay surface sealant (16);
a third step of applying a layer of liquid shim (22) to one or more of the fay surface sealant (16) and a second facing surface (20) of a second component (12) once the fay surface sealant (16) is cured,; and
a fourth step of assembling the first component (10) to the second component (12) with the layer of fay surface sealant (16) and the layer of liquid shim (22) therebetween.

2. The method of Claim 1, wherein the fourth step further comprises securing the first component (10) to the second component (12) via one or more mechanical fasteners (28).

3. The method of Claim 2, further comprising:
forming one or more fastener installation holes (26) extending through the first component (10) and into the second component (12); and
installing the one or more mechanical fasteners (28) in the one or more fastener installation holes (26).

4. The method of any of Claims 1 to 3, further comprising squeezing excess liquid shim (22) from between the first component (10) and the second component (12).

5. The method of any of Claims 1 to 4, further comprising applying the layer of fay surface sealant (16) at a maximum thickness of 0.254 mm.

6. The method of any of Claims 1 to 5, further comprising curing the fay surface sealant (16) via an application of heat.

7. An assembly of two components (10, 12) which are sealed by a method according to independent claim 1.

8. The assembly of Claim 7, further comprising one or more mechanical fasteners (28) securing the first component (10) to the second component (12).

9. The assembly of Claim 8, wherein the one or more mechanical fasteners (28) comprise one or more screws, pins, bolts or rivets.

10. The assembly of any of Claims 7 to 9, wherein the layer of fay surface sealant (16) is a maximum of 0.254 mm in thickness.

11. The assembly of any of Claims 7 to 10, wherein an applied thickness of liquid shim (22) is greater than the gap.

## Patentansprüche

1. Verfahren zur Abdichtung zwischen zwei Komponenten (10, 12), umfassend:
einen ersten Schritt des Auftragens einer Schicht aus Passflächen-Abdichtung (16) auf eine erste zugewandte Fläche (18) einer ersten Komponente (10);
einen zweiten Schritt des Härtens der Passflächen-Abdichtung (16) ;
einen dritten Schritt des Auftragens einer Schicht aus flüssiger Zwischenlage (22) auf eine oder mehrere von der Passflächen-Abdichtung (16) und einer zweiten zugewandten Fläche (20) einer zweiten Komponente (12), sobald die Passflächen-Abdichtung (16) gehärtet ist; und
einen vierten Schritt des Aneinanderfügens der ersten Komponente (10) an die zweite Komponente (12) mit der Schicht aus Passflächen-Abdichtung (16) und der Schicht aus flüssiger Zwischenlage (22) dazwischen.

2. Verfahren nach Anspruch 1, wobei der vierte Schritt ferner das Befestigen der ersten Komponente (10) an der zweiten Komponente (12) über eine oder mehrere mechanische Befestigungen (28) umfasst.

3. Verfahren nach Anspruch 2, ferner umfassend:
Bilden von einem oder mehreren Befestigungsanbringungslöchern (26), die sich durch die erste Komponente (10) und in die zweite Komponente (12) erstrecken;und
Anbringen der einen oder mehreren mechanischen Befestigungen (28) in dem einen oder den mehreren Befestigungsanbringungslöchern (26.).

4. Verfahren nach einem der Ansprüche 1 bis 3, ferner umfassend das Herausdrücken von überschüssiger flüssiger Zwischenlage (22) zwischen der ersten Komponente (10) und der zweiten Komponente (12).

5. Verfahren nach einem der Ansprüche 1 bis 4, ferner umfassend das Auftragen der Schicht aus Passflächen-Abdichtung (16) bei einer maximalen Dicke von 0,254 mm.

6. Verfahren nach einem der Ansprüche 1 bis 5, ferner umfassend das Härten der Passflächen-Abdichtung (16) durch eine Anwendung von Wärme.

7. Baugruppe aus zwei Komponenten (10, 12), die durch ein Verfahren nach dem unabhängigen Anspruch 1 abgedichtet sind.

8. Baugruppe nach Anspruch 7, ferner umfassend eine oder mehrere mechanische Befestigungen (28), welche die erste Komponente (10) an der zweiten Komponente (12) befestigen.

9. Baugruppe nach Anspruch 8, wobei die eine oder mehreren mechanischen Befestigungen (28) eine oder mehrere Schrauben, Stifte, Bolzen oder Nieten umfassen.

10. Baugruppe nach einem der Ansprüche 7 bis 9, wobei die Schicht aus Passflächen-Abdichtung (16) eine maximale Dicke von 0,254 mm aufweist.

11. Baugruppe nach einem der Ansprüche 7 bis 10, wobei eine aufgetragene Dicke von flüssiger Zwischenschicht (22) größer als die Lücke ist.

## Revendications

1. Procédé d'étanchéification entre deux composants (10, 12) comprenant :
une première étape d'application d'une couche de matériau d'étanchéité de surface de contact (16) sur une première surface opposée (18) d'un premier composant (10) ;
une deuxième étape de durcissement du matériau d'étanchéité de surface de contact (16) ;
une troisième étape d'application d'une couche de cale liquide (22) sur un ou plusieurs du matériau d'étanchéité de surface de contact (16) et d'une seconde surface opposée (20) d'un second composant (12) une fois que le matériau d'étanchéité de surface de contact (16) est durci ; et
une quatrième étape d'assemblage du premier composant (10) au second composant (12) avec la couche de matériau d'étanchéité de surface de contact (16) et la couche de cale liquide (22) entre eux.

2. Procédé selon la revendication 1, dans lequel la quatrième étape comprend en outre la fixation du premier composant (10) au second composant (12) par l'intermédiaire d'un ou de plusieurs éléments de fixation mécaniques (28).

3. Procédé selon la revendication 2, comprenant en outre :
la formation d'un ou plusieurs trous d'installation d'élément de fixation (26) s'étendant à travers le premier composant (10) et dans le second composant (12) ; et
l'installation des un ou plusieurs éléments de fixation mécaniques (28) dans les un ou plusieurs trous d'installation d'élément de fixation (26).

4. Procédé selon l'une quelconque des revendications 1 à 3, comprenant en outre la compression de la cale liquide en excès (22) entre le premier composant (10) et le second composant (12) .

5. Procédé selon l'une quelconque des revendications 1 à 4, comprenant en outre l'application de la couche de matériau d'étanchéité de surface de contact (16) à une épaisseur maximale de 0,254 mm.

6. Procédé selon l'une quelconque des revendications 1 à 5, comprenant en outre le durcissement du matériau d'étanchéité de surface de contact (16) par l'intermédiaire d'une application de chaleur.

7. Ensemble de deux composants (10, 12) qui sont étanchéifiés par un procédé selon la revendication indépendante 1.

8. Ensemble selon la revendication 7, comprenant en outre un ou plusieurs éléments de fixation mécaniques (28) fixant le premier composant (10) au second composant (12).

9. Ensemble selon la revendication 8, dans lequel les un ou plusieurs éléments de fixation mécaniques (28) comprennent une ou plusieurs vis, broches, boulons ou rivets.

10. Ensemble selon l'une quelconque des revendications 7 à 9, dans lequel la couche de matériau d'étanchéité de surface de contact (16) est un maximum de 0,254 mm d'épaisseur.

11. Ensemble selon l'une quelconque des revendications 7 à 10, dans lequel une épaisseur appliquée de cale liquide (22) est supérieure à l'écartement.
